**Europäisches Patentamt**

**European Patent Office**

**Office européen des brevets**

(19)

(11) Veröffentlichungsnummer: **0 095 625**
A1

# EUROPÄISCHE PATENTANMELDUNG

(12)

(21) Anmeldenummer: **83104697.4**

(22) Anmeldetag: **13.05.83**

(51) Int. Cl.³: **F 16 L 39/00,** F 16 L 37/00, B 29 F 1/08, B 22 D 17/22

(30) Priorität: **29.05.82 DE 3220359**

(43) Veröffentlichungstag der Anmeldung: **07.12.83** Patentblatt 83/49

(84) Benannte Vertragsstaaten: **AT BE CH FR GB IT LI NL SE**

(71) Anmelder: **CEBI Präzisionsgeräte GmbH & Co. KG., Balinger Strasse 19, D-7451 Grosselfingen (DE)**

(72) Erfinder: **Cless, Heinzdieter, Beethovenstrasse 43, D-7470 Albstadt-1 (DE)**

(74) Vertreter: **Patentanwälte Kohler - Schwindling - Späth, Hohentwielstrasse 41, D-7000 Stuttgart 1 (DE)**

(54) **Flüssigkeitskupplung.**

(57) Eine Flüssigkeitskupplung zum lösbaren Anschließen von mindestens zwei Leitungen mindestens eines Flüssigkeitskreislaufes, insbesondere des Kühlkreislaufes eines Spritzgießwerkzeuges od.dgl. an eine Flüssigkeitsversorgung, mit einem mit der Flüssigkeitsversorgung zu verbindenden Hauptteil (4) und mit einem mit dem Flüssigkeitsverbraucher zu verbindenden Anschlußteil, das mit dem Hauptteil (4) lösbar verbindbar ist, wobei eine Wärmeisolation zum Vermindern des Wärmeüberganges zwischen benachbarten, Flüssigkeit führenden Leitungen im Hauptteil (4) und/oder Anschlußteil (2) vorgesehen ist. Dadurch werden definierte Kühlverhältnisse sichergestellt.

Anmelderin:

Firma
CEBI Präzisionsgeräte
GmbH & Co.KG.
Balinger Straße 19
7451 Grosselfingen

Stuttgart, den 10. Mai 1983
P 4190 EP R/Rh

Vertreter:

Kohler-Schwindling-Späth
Patentanwälte
Hohenwielstraße 41
7000 Stuttgart 1

## Flüssigkeitskupplung

Die Erfindung betrifft eine Flüssigkeitskupplung zum lösbaren Anschließen von mindestens zwei Leitungen mindestens eines Flüssigkeitskreislaufs, insbesondere eines Spritzgießwerkzeugs o. dgl. an eine Flüssigkeitsversorgung, mit einem mit der Flüssigkeitsversorgung zu verbindenden Hauptteil, und mit einem mit dem Verbraucher zu verbindenden Anschlußteil, das mit dem Hauptteil lösbar verbindbar ist.

./.

Insbesondere bei Werkzeugen für Druckgießmaschinen oder Spritzgießmaschinen wird häufig eine Wasserkühlung benötigt, und das Werkzeug weist je nach seiner Art einen oder mehr Wasserkreisläufe auf. Wenn das Werkzeug aus der Spritzgießmaschine herausgenommen wird, werden die Verbindungen zur Kühlwasserversorgung gelöst, dabei verbleibt das Anschlußteil, das üblicherweise über Schlauchleitungen, Verrohrungen, Sonderplatten zur Wasserleitung oder direkt mit dem Werkzeug verbunden ist, am Werkzeug.

Der Erfindung liegt die Erkenntnis zugrunde, daß bei der Verwendung von herkömmlichen Flüssigkeitskupplungen eine definierte Kühlung des Werkzeugs oder einzelner Abschnitte des Werkzeugs häufig nicht möglich ist, was die Ursache von mangelhaften Gußerzeugnissen sein kann. Die Erfindung hat erkannt, daß diese Mängel in der Kühlung ihre Ursache darin haben, daß das dem Werkzeug zufließende Wasser durch aus dem Werkzeug abfließendes Wasser, das ebenfalls über die Flüssigkeitskupplung geleitet wird, wenn auch über von dem zufließenden Wasser getrennte Kanäle, erwärmt wird, weil keinerlei Maßnahmen zur Verhinderung eines Wärmeübergangs zwischen verschiedenen Wasserkreisläufen oder auch dem Zuflußanschluß und dem Abflußanschluß des gleichen Wasserkreislaufs getroffen sind.

Der Erfindung liegt die Aufgabe zugrunde, eine Flüssigkeitskupplung der eingangs geschilderten Art so auszubilden, daß eine gleichmäßigere Versorgung eines angeschlossenen

./.

- 3 -

Verbrauchers mit Wasser oder einem anderen Temperiermedium definierter Temperatur möglich ist. Diese Aufgabe wird gemäß der Erfindung dadurch gelöst, daß eine Wärmeisolation zum Verhindern des Wärmeübergangs zwischen benachbarten, Flüssigkeit führenden Kanälen im Hauptteil und/oder Anschlußteil der Flüssigkeitskupplung vorgesehen ist.

Die Erfindung ist nicht darauf beschränkt, daß die Kupplung zum Anschluß von Kühlwasserkreisläufen dient. Die Erfindung umfaßt auch den Anschluß von Flüssigkeitskreisläufen, denen ein anderes der Temperierung dienendes Medium zugeführt wird, wie etwa warmes Wasser oder warmes Öl. Der Einfachheit halber wird jedoch im folgenden nur von Kühlwasserkreisläufen gesprochen und die Flüssigkeitskupplung als Wasserkupplung bezeichnet.

Je nach den Anforderungen, die an die Verminderung des Wärmeübergangs gestellt werden, mag es im Einzelfall ausreichen, eine derartige Wärmeisolierung lediglich im Hauptteil oder lediglich im Anschlußteil vorzusehen. Bevorzugt ist jedoch, die Wärmeisolierung in beiden genannten Teilen vorzusehen. Je nach dem Anwendungsfall können an die Wirksamkeit der Wärmeisolation, also an den Wärmeübergangswiderstand, unterschiedliche Anforderungen gestellt sein. Für die Zwecke der Kühlwasserversorgung von Gießwerkzeugen reicht es im allgemeinen aus, solche Maßnahmen zur Wärmeisolation vorzusehen, die keine Vergrößerung der räumlichen Abmessungen der Wasserkupplung gegenüber bekannten Wasserkupplungen mit sich bringen.

Der Vorteil der Erfindung liegt darin, daß dadurch, daß der Wärmeübergang zwischen benachbarten wasserführenden Kanälen je nach dem Anwendungsfall ausreichend stark erschwert wird, definierte Kühlverhältnisse beim Wasserverbraucher, insbesondere bei Gießwerkzeugen, herrschen.

./.

Dies macht es möglich, die Gießwerkzeuge vor dem Einsatz in der Spritzgießmaschine vorzuheizen, beispielsweise durch im Gießwerkzeug angeordnete elektrische Heizleiter, und gleichzeitig das Gießwerkzeug an eine Kühlwasserversorgung anzuschließen, so daß sich im Werkzeug
während des Vorheizens bereits die Temperaturverhältnisse,
die beim Betrieb in der Spritzgießmaschine herrschen,
weitestgehend einstellen und daher nach dem (ausreichend
rasch vorzunehmenden)Einbau in die Spritzgießmaschine von
Anfang an einwandfreie Gußstücke erhalten werden. Weiter
ist von Vorteil, daß durch die thermische Trennung der
Wasserkreisläufe die Möglichkeit eröffnet ist, durch
Temperaturmessungen an den einzelnen zu der Wasserkupplung hinführenden und von der Wasserkupplung wegführenden Leitungen erheblich genauere Aussagen als bisher gewinnen zu können, beispielsweise darüber, ob der Kühlwasserdurchsatz für einen bestimmten Wasserkreislauf erhöht oder verringert werden muß. Weiter ist bei der Erfindung von Vorteil, daß bei Änderungen des Kühlwasserdurchsatzes bei einem oder mehr Kreisläufen sich die
Temperaturverhältnisse in den anderen Kühlmittelkreisläufen nur durch eine Änderung der Temperaturverteilung
im Gießwerkzeug ändern können, nicht jedoch durch einen
Wärmeübergang in der Wasserkupplung.

Vorzugsweise ist die Wärmeisolation durch Kunststoff gebildet. Bei Ausführungsformen der Erfindung kann die
Wärmeisolierung rohrartig metallische, wasserführende
Leitungen umgeben. Bei anderen Ausführungsformen der
Erfindung können wasserführende Leitungen aus Kunststoff vorgesehen sein.

Bei einer Ausführungsform der Erfindung ist das Anschlußteil als ein schlittenartig in eine Führung des Hauptteils
einschiebbarer Stecker ausgebildet. Dadurch ergibt sich ein
einfacher und sehr schnell herstellbarer Anschluß auch bei
einer Vielzahl von Wasserkreisläufen. Andere Ausführungsformen können auch ein direktes stirnseitiges Einstecken
oder Einkuppeln und anschließendes Anpressen zur Erzielung der Dichtheit vorsehen. Gemäß einer Weiterbildung
der Erfindung kann der Stecker mindestens im Bereich
seiner Wasseranschlüsse vollständig aus Kunststoff bestehen.
Insbesondere besteht er vorzugsweise ausschließlich aus
Kunsstoff.

Als Kunststoff für die Wärmeisolation wird vorzugsweise PPS
(Polyphenylensulfid) verwendet. Bei Bedarf kann der Kunststoff durch geeignetes Material, insbesondere auch Glasfasern, verstärkt sein. Dieser Kunststoff zeichnet s ch vor
allem auch durch seine Kühlmittelbeständigkeit, also seine
Beständigkeit gegen Zusätze im Kühlwasser, sowie durch ausreichende Steifigkeit bei erhöhten Dauertemperaturen aus.
Auch POM, PA, PBTP, PETP,PPO, PSO, PES, PC, PUR und ähnliche
Kunststoffe, verstärkt oder unverstärkt, können verwendet
sein. Wenn keine stark erhöhten Temperaturen auftreten,
kommt eine weitere Vielzahl von Kunststoffen in Betracht.

Um eine sichere Verbindung der beiden Teile der Wasserkupplung zu gewährleisten, ist bei einer Ausführungsform
der Erfindung ein Endschalter vorgesehen, der anspricht,
wenn das Anschlußstück mit dem Hauptteil verbunden ist,
insbesondere der Stecker vollständig ins Hauptteil eingeschoben ist. Der Endschalter veranlaßt dann die weiteren
Schaltmaßnahmen, die zur Zuführung des Kühlwassers erforderlich sind.

Bei einer Ausführungsform der Erfindung, bei der das Hauptteil eine Andrückvorrichtung aufweist, um nach dem Anschließen des Anschlußteils eine wasserdichte Verbindung herzustellen, ist ein Endschalter zum Überwachen des Andrückens vorgesehen. Die Andrückvorrichtung soll das Einschieben des Steckers dadurch erleichtern, daß während des Einschiebens noch keine Berührung der im Betrieb dicht aneinander anliegenden Flächen vorhanden ist. Diese Berührung wird erst durch die Andrückvorrichtung hergestellt. Bei der geschilderten Ausführungsform kann der Endschalter dazu verwendet werden, die Kühlwasserzufuhr von einer Kühlwasserversorgung zum Hauptteil erst dann freizugeben, wenn eine einwandfrei dichte Verbindung durch die Andrückvorrichtung hergestellt ist.

Die Erfindung betrifft auch eine Temperieranlage für Gießwerkzeuge o. dgl. mit einer Flüssigkeitskupplung, insbesondere Wasserkupplung, und mit einer Einrichtung zum Abschalten der Flüssigkeitszufuhr vor dem Trennen des Anschlußteils vom Hauptteil der Kupplung. Gemäß einer Ausführungsform der Erfindung, die auch unabhängig von der oben beschriebenen Erfindung verwirklicht sein kann, ist eine Einrichtung zum Zuführen von Druckluft in die Flüssigkeitskanäle der Kupplung, insbesondere des Hauptteils, vorgesehen, um vor dem Trennen der Verbindung zwischen dem Anschlußteil und dem Hauptteil die Leitungswege des angeschlossenen Verbrauchers, insbesondere des Gießwerkzeugs, auszublasen. Dadurch wird einerseits ein sauberes Arbeiten ermöglicht, weil nach dem Lösen der Verbindung der Wasserkupplung nicht noch Wasser aus dem Gießwerkzeug ausfließt, andererseits wird auch einer Korrosion der Kühlkanäle des Gießwerkzeugs vorgebeugt, die begünstigt werden könnte, wenn diese Kanäle bei einem auf Lager genommenen Werkzeug noch Wasser enthalten. Die Erfindung **betrifft auch eine Steuervorrichtung.**

Weitere Merkmale und Vorteile der Erfindung ergeben sich aus der nachfolgenden Beschreibung eines Ausführungsbeispiels der Erfindung anhand der Zeichnung, die erfindungswesentliche Einzelheiten zeigt, und aus den Ansprüchen. Die einzelnen Merkmale können je einzeln für sich oder zu mehreren in beliebiger Kombination bei einer Ausführungsform der Erfindung verwirklicht sein. Es zeigen

Fig. 1        eine Draufsicht auf die komplette Wasserkupplung entsprechend dem Pfeil I in Fig. 2,

Fig. 2        eine Seitenansicht der Wasserkupplung von Fig. 1, teilweise geschnitten,

Fig. 3        einen Längsschnitt durch den Stecker der Wasserkupplung entsprechend der Linie III-III in Fig. 1, teilweise abgebrochen,

Fig. 4        einen Querschnitt durch den Stecker entsprechend der Linie IV-IV in Fig. 1, und

Fig. 5        eine schematische Darstellung einer Kühlwasserversorgung unter Verwendung einer Wasserkupplung nach Fig. 1.

Die Wasserkupplung 1 weist ein mit Kühlwasserkanälen eines Spritzgießwerkzeugs über nicht gezeigte Schlauchleitungen zu verbindendes, nachfolgend als Stecker 2 bezeichnetes Anschlußteil auf, das in eine Schiebeführung eines Hauptteils 4 der Wasserkupplung einschiebbar ist. Im eingeschobenen Zustand des einstückig hergestellten Steckers 2 werden an einer Grundplatte 6 des Steckers angeordnete Führungsrippen 8 von Führungsschienen 10, die an einer Aufnahmeplatte 12 aus Metall des Hauptteils 4 angeordnet sind, übergriffen.

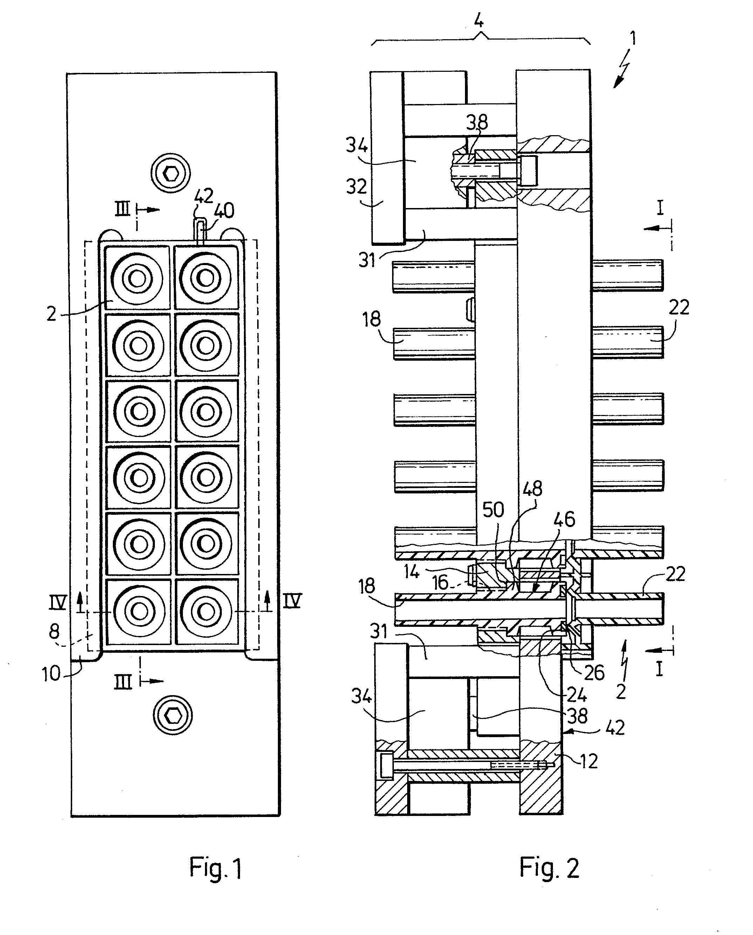

Das Hauptteil 4 weist eine Trägerplatte 14 aus Metall auf, die insgesamt zwölf Gewindebohrungen 16 trägt, die in zwei parallelen Reihen zu je sechs Bohrungen angeordnet sind. In jede der Gewindebohrungen 16 ist eine Schlauchtülle 18 aus dem oben erwähnten Kunststoff PPS eingeschraubt, die auf ihre in Fig. 2 linken Seite über die Trägerplatte 14 frei vorragt, damit dort jeweils ein Schlauch zur Zufuhr bzw. Abfuhr von Kühlflüssigkeit angeschlossen werden kann. Der Stecker 2 weist, einstückig mit der Grundplatte 6 verbunden, in der gleichen räumlichen Anordnung wie die Schlauchtüllen 18 Schlauchtüllen 22 auf, die dann, wenn der Stecker 2 vollständig in das Hauptteil 4 eingeschoben ist, mit den Schlauchtüllen 18 fluchten. Zu dem Zeitpunkt, wo der Stecker 2 in das Hauptteil 4 eingeschoben ist, besteht jedoch noch keine wasserdichte Verbindung zwischen dem Inneren der Schlauchtüllen 18 und 22. Um diese wasserdichte Verbindung zu schaffen, ist an der in Fig. 2 rechten Stirnfläche jeder Schlauchtülle 18 in eine ringförmige Nut 24 ein Dichtring 26 eingelassen, der mit einer ringförmigen Dichtfläche 28, wie bei jeder Schlauchtülle 22 vorgesehen ist, zusammenarbeitet. Der Stecker 2 besteht vollständig aus PPS.

Die Trägerplatte 14 trägt außerdem mittels Halteplatten 31 und 32, die im Bereich ihrer beiden Enden angeordnet sind, jeweils einen pneumatischen Zylinder 34, dessen Arbeitskolben über eine Kolbenstange 38 mit der Aufnahmeplatte 12 verbunden ist. Durch Zufuhr von Druckluft durch in Fig. 2 nicht gezeigte Leitungen zu den Druckluftzylindern 34 kann die Aufnahmeplatte 12 aus einer in Fig. 2 nicht dargestellten Stellung, in der sie gegenüber der Darstellung der Fig. 2 von der Trägerplatte 14 einen Abstand aufweist und nach rechts verschoben ist, in die in Fig. 2 gezeigte Stellung bewegt werden, und umgekehrt. In der in Fig. 2 gezeigten Stellung liegen die Dichtflächen 28 dicht an den Dichtringen 26 an, so daß die durch die Schlauchtüllen 18 und 22 gebildeten Kanäle flüssigkeitsdicht miteinander verbunden sind. Zum Einschieben und zum Herausziehen des Steckers 2 ist jedoch die Aufnahmeplatte 12 in der soeben geschilderten Weise von der Trägerplatte 14 abgehoben. Wird die Aufnahmeplatte 12 zur Anlage an die Trägerplatte 14 gebracht, so pressen die mit der Aufnahmeplatte 12 verbundenen Führungsschienen 10, die die rippenartigen Vorsprünge 8 des Steckers 2 übergreifen, den Stecker 2 fest gegen die Dichtungen 26.

Der Stecker 2 ist in einer nicht näher dargestellten
Weise so ausgebildet, daß er in die durch die Führungsschienen 10 gebildete Führung nur in einer Richtung eingeschoben werden kann, um Irrtümer beim Einschieben zu
vermeiden und somit sicherzustellen, daß **die verschiedenen**
Kühlwasserkreisläufe des Werkzeugs, im Beispiel sind
dies maximal sechs Kühlmittelkreisläufe, jeweils mit den
vorgesehenen und voneinander möglicherweise verschiedenen
Kühlwasserdurchsätzen beaufschlagt werden.

An seinem in Einschieberichtung vorderen Ende, in Fig. 1
und 3 oben, trägt der Stecker 2 einen Vorsprung 40, der
in eine Nut 42 der Aufnahmeplatte 12 eingreift und einen
dort angeordneten, nicht dargestellten Endschalter dann
betätigt, wenn der Stecker 2 vollständig eingeschoben
ist. Erst dann, wenn dieser Endschalter betätigt ist,
kann durch Zufuhr von Druckluft zu den Zylindern 34 in
der geschilderten Weise die dichte Verbindung zwischen
den Schlauchtüllen 18 und 22 hergestellt werden.

Wenn die Aufnahmeplatte 12 ihre in Fig. 2 gezeigte Stellung relativ zur Trägerplatte 16 einnimmt, so ragen die
in Fig. 2 rechten Endabschnitte der Schlauchtüllen 18
etwas über die nach rechts weisende Fläche 42 der Aufnahmeplatte 12 hinaus. Wenn dagegen die Aufnahmeplatte
12 von der Trägerplatte 14 abgehoben ist, so liegen die
in Fig. 2 nach rechts weisenden Enden der Schlauchtüllen
18 etwas **unterhalb der Ebene der Fläche 42.**

Wie Fig. 2 zeigt, weisen die Schlauchtüllen 18 in ihrem rechts von den Gewindebohrungen 16 liegenden Bereich Schlüsselflächen 46 zum Ansetzen eines Werkzeugs beim Einschrauben der Schlauchtüllen 18 in die Trägerplatte 16 auf. Die definierte Stellung der Schlauchtüllen 18 wird durch einen ringförmigen Vorsprung 48 gesichert, der am Ende des an den Schlauchtüllen 18 vorgesehenen, in die Gewindebohrung 16 eingreifenden Außengewindes angeordnet ist und sich auf einer ringförmigen Schulter 50, die die Gewindebohrung 16 umgibt, abstützt. Die Aufnahmeplatte 12 wird erst montiert, wenn die Schlauchtüllen 18 mit der Trägerplatte 14 verschraubt sind.

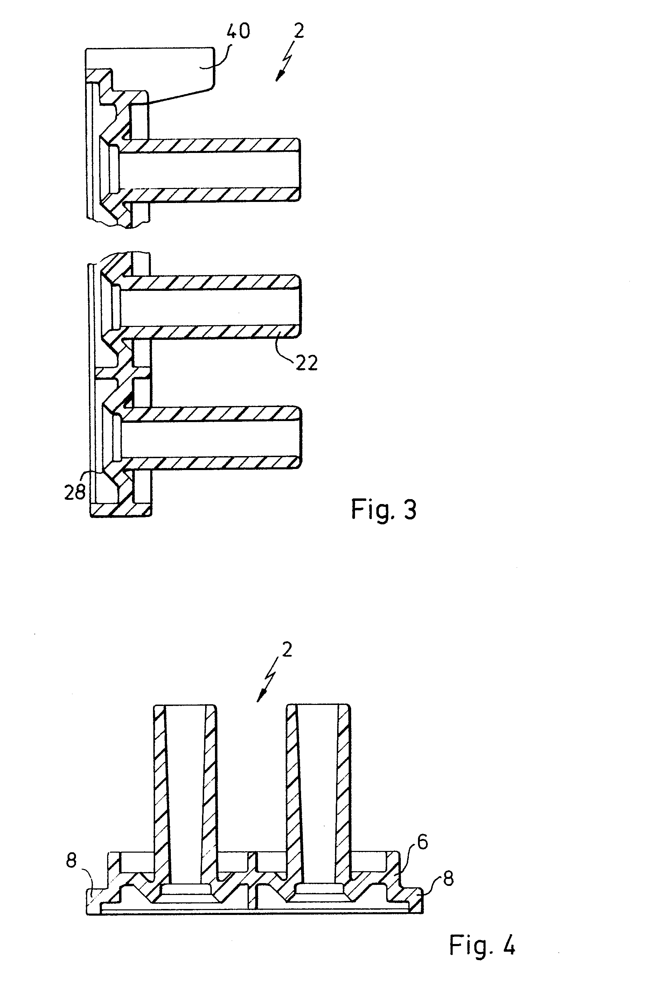

Für den Fall, daß der Benutzer der dargestellten Wasserkupplung nicht wünscht, alle in der Wasserkupplung vorgesehenen zwölf Kühlmittelkanäle zu benutzen, kann es zweckmäßig sein, den Stecker 2 so herzustellen, daß die in Fig. 3 nach rechts weisenden Enden der durch die Schlauchtüllen 22 gebildeten Kanäle noch druckdicht verschlossen sind. Je nach der Anzahl der vom Benutzer gewünschten tatsächlich zu benutzenden Kühlmittelkanäle kann dann die Schlauchtülle zwecks Öffnung des Verschlusses entweder etwas gekürzt werden, oder es wird durch Bohren eine Öffnung geschaffen.

Im Ausführungsbeispiel hat der Stecker 2 eine Länge von etwa 20 cm und eine Breite von etwa 8 cm. Die Höhe des Steckers, in Längsrichtung der Schlauchtüllen 22 gemessen, beträgt etwa 5 cm. Die freie Länge der Schlauchtüllen, die zum Anschluß eines Schlauches zur Verfügung

steht, beträgt etwa 4 cm. Die übrigen Abmessungen können
der maßstäblichen Zeichnung entnommen werden.

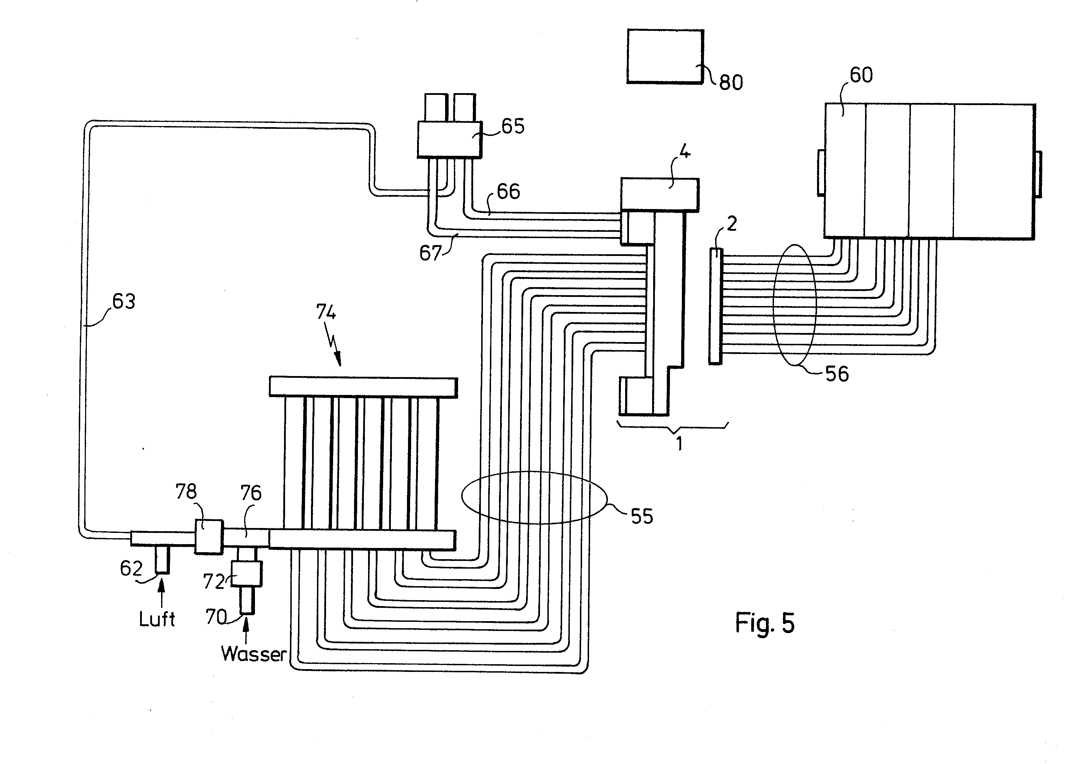

In Fig. 5 ist das Schema einer Kühlwasserversorgung für
ein Werkzeug einer Druckgießmaschine dargestellt. Zur
Zeichnungsvereinfachung sind nur die zum Hauptteil 4
und zum Stecker 2 der Wasserkupplung 1 führenden jeweils
sechs Kühlmittelzuflußleitungen 55 und 56 gezeigt. Das
schematisch dargestellte Werkzeug trägt das Bezugszeichen 60. Die in Fig. 5 gezeigte Anlage weist einen Drucklufteinlaß 62 auf, durch den Druckluft über eine Leitung
63 zu einem elektrisch betätigbaren Ventil 65 gelangt,
von wo sie je nach Schaltstellung über eine Leitung 66
oder eine Leitung 67 zum Hauptteil 4 gelangt und dort den
pneumatischen Zylindern 34 zugeführt wird, um entweder
die Aufnahmeplatte 12 an die Trägerplatte 16 anzupressen
oder von dieser abzuheben. Die Anlage weist außerdem
einen Wassereinlauf 70 auf, hinter dem ein Schaltventil
72 angeordnet ist, über das das eintretende Wasser über
**eine Wasserverteiler-Batterie 74 den Leitungen 55 zugeführt wird. Die mit der Batterie 74 in Verbindung stehende,**
hinter dem Schaltventil 72 liegende Verteilerleitung 76
ist von der Druckluftleitung 63 beim normalen Betrieb
durch ein Schaltventil 78 getrennt. Wenn die Arbeit mit
dem gerade an dem Hauptteil 4 der Wasserkupplung 1 angeschlossenen Werkzeug 60 beendet werden soll, so gibt
der Arbeiter einer Steuerelektronik 80 ein Signal, die
dann in nicht näher gezeigter Weise das Schaltventil 72
schließt und anschließend das Schaltventil 78 öffnet,
so daß Druckluft in die Leitungen 55 und über die Wasserkupplung 1 in die Leitungen 56 gelangt und das in diesen
Leitungen vorhandene Wasser ausbläst. Die Steuerelektronik 80 enthält eine Schaltuhr, die dafür sorgt, daß der
Ausblasvorgang ausreichend lange Zeit anhält, damit das
Innere der im Werkzeug 60 vorgesehenen Kühlmittelkanäle
beim Ausblasen vollkommen trocken wird. Wenn diese Zeit
abgelaufen ist, schließt die Steuerelektronik 80 das
Schaltventil 78 und steuert das Schaltventil 65 so, daß
die Aufnahmeplatte 12 von der Trägerplatte 16 abgehoben
wird und der Arbeiter nun den Stecker 2 aus dem Hauptteil 4 herausziehen kann.

Ist ein neues Werkzeug in der Maschine montiert und
der Stecker 2 dieses Werkzeugs ins Hauptteil 4 vollständig eingeschoben, so daß der oben erwähnte Endschalter anspricht, so steuert die Steuerelektronik 80, nachdem sie das Ansprechen des soeben erwähnten Endschalters erkannt hat, das Schaltventil 65 so,
daß der Stecker gegen das Hauptteil 4 angepreßt wird
und dadurch eine flüssigkeitsdichte Verbindung hergestellt wird. Ein zweiter Endschalter in der Wasserkupplung 1 erkennt, daß das Andrücken korrekt erfolgt
ist und gibt ein entsprechendes Signal an die Steuerelektronik, die daraufhin das Schaltventil 72 öffnet,
so daß Kühlflüssigkeit ins Werkzeug 60 gelangt.

./.

In denjenigen Fällen, in denen das Werkzeug 60 zur Vorbereitung seines Einsatzes in der Spritzgießmaschine vorgeheizt und vorgekühlt wird, ist dafür Sorge getragen, daß nur ein sehr kurzes Ausblasen des Wassers erfolgt, das ausreicht, um eine Verschmutzung des Arbeitsraums durch aus dem Stecker 2 austretende Kühlflüssigkeit zu verhindern. Das Auswechseln eines Werkzeugs läßt sich leicht so organisieren, daß auch während des Einbaus eines neuen Werkzeugs in die Spritzgießmaschine dieses Werkzeug noch an der Vorheizeinrichtung und Vorkühleinrichtung angeschlossen ist. Bei dem für den Stecker 2 und die Schlauchtüllen 18 verwendeten PPS handelt es sich um den unter der Bezeichnung Ryton R-8 von der Firma Phillips Petroleum Company (USA) vertriebenen glasfaserverstärkten Kunststoff, der in dem Prospekt Phillips Petroleum 66 RYTON PPS Ryton R-8, Datum der Drucklegung: 10/1980, beschrieben ist.

0095625

## Patentansprüche

1. Flüssigkeitskupplung zum lösbaren Anschließen von mindestens zwei Leitungen mindestens eines Flüssigkeitskreislaufs, insbesondere des Kühlkreislaufs eines Spritzgießwerkzeugs o. dgl. an eine Flüssigkeitsversorgung, mit einem mit der Flüssigkeitsversorgung zu verbindenden Hauptteil und mit einem mit dem Flüssigkeitsverbraucher zu verbindenden Anschlußteil, das mit dem Hauptteil lösbar verbindbar ist, dadurch gekennzeichnet, daß eine Wärmeisolation zum Vermindern des Wärmeübergangs zwischen benachbarten, Flüssigkeit führenden Leitungen im Hauptteil (4) und/oder Anschlußteil (2) vorgesehen ist.

2. Kupplung nach Anspruch 1, dadurch gekennzeichnet, daß die Wärmeisolation rohrartig metallische wasserführende Leitungen umgibt.

3. Kupplug nach Anspruch 1, dadurch gekennzeichnet, daß Flüssigkeit führende Leitungen (Schlauchtüllen 18, 22) aus Kunststoff vorgesehen sind.

4. Kupplung nach einem der vorhergehenden Ansprüche, dadurch gekennzeichnet, daß das Anschlußteil (2) als ein schlittenartig in eine Führung (10) des Hauptteils (4) einschiebbarer Stecker ausgebildet ist.

5. Kupplung nach Anspruch 4, dadurch gekennzeichnet, daß der Stecker (2) mindestens im Bereich seiner Flüssigkeitsanschlüsse vollständig aus Kunststoff besteht.

6. Kupplung nach einem der vorhergehenden Ansprüche, dadurch gekennzeichnet, daß ein Endschalter vorgesehen ist, der anspricht, wenn das Anschlußteil (2) vollständig ins Hauptteil (4) eingeführt ist.

7. Kupplung nach einem der vorhergehenden Ansprüche, bei der das Hauptteil eine Andrückvorrichtung aufweist, um nach dem Einstecken des Anschlußteils eine flüssigkeitsdichte Verbindung herzustellen, dadurch gekennzeichnet, daß ein Endschalter zum Überwachen des Andrückens vorgesehen ist.

8. Temperieranlage für Spritzgießwerkzeuge o. dgl. mit einer Flüssigkeitskupplung, insbesondere Wasserkupplung, mit einer Einrichtung zum Abschalten der Flüssigkeitszufuhr vor dem Trennen des Anschlußteils vom Hauptteil der Kupplung, insbesondere nach einem der vorhergehenden Ansprüche, dadurch gekennzeichnet, daß eine Einrichtung (78, 80) zum Zuführen von Druckluft in Flüssigkeitskanäle der Kupplung (1) vorgesehen ist, um vor dem Trennen der Verbindung die Leitungszüge des Flüssigkeitsverbrauchers auszublasen.

9. Steuervorrichtung für eine Flüssigkeitskupplung mit einem Hauptteil und einem Anschlußteil, daß durch eine Andrückvorrichtung flüssigkeitsdicht mit dem Hauptteil verbindbar ist, insbesondere nach einem der vorhergehenden Ansprüche, dadurch gekennzeichnet, daß die Steuervorrichtung derart ausgebildet ist, daß sie bei
der Herstellung der Verbindung aufgrund des Ausgangssignals eines Endschalters überwacht, ob das Anschlußteil ins Hauptteil richtig eingeschoben ist, daß die
Steuervorrichtung anschließend das Andrücken des
Anschlußteils ans Hauptteil veranlaßt, daß die Steuervorrichtung durch das Ausgangssignal eines weiteren
Endschalters das korrekte Andrücken überwacht und nach
dem korrekten Andrücken das Einschalten der Flüssigkeitszufuhr zur Flüssigkeitskupplung veranlaßt.

10.     Steuervorrichtung nach Anspruch 9, dadurch gekennzeichnet, daß die Steuervorrichtung derart ausgebildet
ist, daß sie beim Lösen der Verbindung zwischen Anschlußteil und Hauptteil in folgender Weise arbeitet:

Nach einem von außen eingegebenen Signal, das das
Entkuppeln veranlaßt, wird die Flüssigkeitszufuhr
abgeschaltet; anschließend wird das Ausblasen der
Leitungszüge des Flüssigkeitsverbrauchers während
einer vorbestimmten Zeitdauer veranlaßt; anschließend
wird die Andrückvorrichtung in die das Lösen des
Anschlußteils vom Hauptteil ermöglichende Stellung
gebracht.

Fig. 1

Fig. 2

Fig. 3

Fig. 4

Fig. 5

Luft

Wasser

## EINSCHLÄGIGE DOKUMENTE

EP 83104697.4

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|-----------|-----|-----|-----|
| X | DE - A1 - 2 910 488 (LOGIC DEVICE)<br>* Fig. 1 *<br>-- | 1,8 | F 16 L 39/00<br>F 16 L 37/00<br>B 29 F 1/08<br>B 22 D 17/22 |
| Y | FR - A - 2 181 261 (MARTINON)<br>* Gesamt *<br>-- | 1,4 | |
| Y | DE - A1 - 2 538 128 (H. KUHNKE)<br>* Fig. 1-6 *<br>-- | 1,4 | |
| A | US - A - 4 110 140 (LAAKANIEMI)<br>* Gesamt *<br>-- | 1,3,5 | |
| A | DE - A1 - 3 037 114 (LOGIC DEVICE)<br>* Gesamt *<br>-- | 1,8 | |
| A | DE - B - 2 045 964 (SINGLE THERMO-BAUGERÄTE)<br>* Fig. 1,2 *<br>---- | 1,8 | |

RECHERCHIERTE SACHGEBIETE (Int. Cl. ³)

F 16 L 9/00
F 16 L 25/00
F 16 L 39/00
F 16 L 47/00
F 16 L 53/00
F 16 L 55/00
F 16 L 59/00
B 29 F 1/00
B 22 D 17/00

Der vorliegende Recherchenbericht wurde für alle Patentansprüche erstellt.

| Recherchenort | Abschlußdatum der Recherche | Prüfer |
|---|---|---|
| WIEN | 22-07-1983 | SCHUGANICH |